# FASCICULE DE BREVET EUROPEEN

(11) **EP 2 758 327 B1**
(45) Date de publication et mention de la délivrance du brevet: **05.06.2019**
(21) Numéro de dépôt: 12767067.7
(22) Date de dépôt: 12.09.2012
(51) Int. Cl.: B65G 57/24, B65G 61/00

(54) **DISPOSITIF DE TRANSFERT DE COUCHES PRÉ-CONFORMÉES D'OBJETS SUR LE DESSUS D'UNE PALETTE.**
VORRICHTUNG ZUR ÜBERTRAGUNG VORGEFORMTER SCHICHTEN VON OBJEKTEN AUF DAS OBERE ENDE EINER PALETTE
DEVICE FOR TRANSFERRING PRE-FORMED LAYERS OF OBJECTS TO THE TOP OF A PALLET

(30) Priorité: 15.09.2011 FR 1158240
(43) Date de publication de la demande: 30.07.2014
(73) Titulaire: Gebo Packaging Solutions Italy SRL, 43126 Parma (IT)
(72) Inventeur: PETROVIC, Zmaj, F-76930 Octeville-sur-Mer (FR)
(74) Mandataire: Sidel Group
(86) Numéro de dépôt international: PCT/FR2012/052031
(87) Numéro de publication internationale: WO 2013/038102

(56) Documents cités:
- EP-A1- 1 457 442
- EP-A1- 2 112 101
- WO-A1-2010/086292
- IT-A1- MI 941 558
- JP-A- 58 139 926

## Description

### DOMAINE DE L'INVENTION :

L'invention concerne les systèmes de palettisation.

L'invention concerne en particulier les dispositifs de transfert de couches pré-conformées d'objets sur le dessus d'une palette. De tels dispositifs, souvent appelés « palettiseurs », chargent successivement des couches d'objets en une pile de couches sur le dessus d'une palette, chaque couche d'objets étant préalablement mise en forme pour être empilable.

L'invention concerne les dispositifs ayant un temps de cycle réduit pour le chargement.

On entend par "couche préconformée d'objets destinés à être transférés sur le dessus d'une palette standardisée" un ensemble de plusieurs objets disposés côte à cote, des objets adjacents étant sensiblement en contact et indépendants les uns des autres. La dimension extrême de la couche d'objets étant égale, ou bien inférieure et sensiblement égale, à une dimension standardisée de la palette. Les principaux standards de palettes sont 800 x 1200 mm en Europe et 1000 x 1200 mm aux USA.

### ETAT DE LA TECHNIQUE :

Le document JP 58139926 a décrit en 1983 une unité d'empilage qui comprend un coulisseau supérieur et un coulisseau inférieur sur une colonne. Le coulisseau supérieur est équipé d'une tête qui saisit les objets un par un en soulevant l'objet par ses extrémités et en déplaçant cet objet à côté d'un objet précédemment chargé sur le dessus de la palette. Ainsi les objets sont transférés sur la palette avant que la couche de palettisation ne soit formée. Le coulisseau inférieur est équipé de deux barres horizontales conçues pour soulever un objet unique.

Une telle unité d'empilage ne fait pas partie du domaine de l'invention car elle ne convient pas pour transférer une couche préconformée d'objets sur le dessus d'une palette. D'une part, le coulisseau inférieur est incapable de soulever une couche préconformée d'objets car les objets tomberaient entre les barres. D'autre part, la tête du coulisseau supérieur est incapable de charger une couche préconformée d'objets car ceux-ci tomberaient lors du transfert.

Une telle unité d'empilage présente une cadence d'empilage très faible car il y a autant de cycles de saisie et de transfert que d'objets dans la couche d'objets à palettiser. Ces multiples va-et-vient de l'unité d'empilage sont non seulement longs mais également très gourmands en énergie car, pour chaque objet transféré, tous les organes de l'unité d'empilage doivent être mis en mouvement.

Le domaine de l'invention est apparu notamment pour atteindre des hauts débits de palettisation en augmentant la cadence et en réduisant l'énergie consommée pour empiler des objets en couches sur une palette. Grâce à la standardisation des dimensions de palettes, il a été développé des dispositifs de préparation de couches qui juxtaposent les objets selon une configuration permettant d'optimiser le nombre d'objets contenus sur la surface de la palette standard. Puis un autre dispositif, situé en aval, transfère en bloc l'ensemble de la couche préconformée d'objets sur le dessus de la palette.

Dans le domaine de l'invention, le document EP 2 243 731 a décrit en 2009 un palettiseur comprenant deux colonnes en rotation autour d'un même axe de rotation. Chaque colonne porte un outil, l'un des outils dépose une couche pendant que l'autre outil prend une autre couche pré-conformée. Chaque outil est monté en porte à faux sur sa colonne propre. Un tel palettiseur permet de réduire le temps de cycle en doublant les équipements. Un tel palettiseur présente l'inconvénient que la rotation des outils et des colonnes occupe de l'espace sur les côtés du convoyeur de mise à disposition des couches pré-conformées. De plus, le doublement des équipements est onéreux.

D'autres types de palettiseurs procèdent au chargement des palettes à une hauteur fixe. C'est la palette elle-même qui descend au fur et à mesure du chargement. L'inconvénient est qu'il faut monter la couche préformée en hauteur, ce qui augmente le coût de maintenance de l'équipement de pré-conformage des couches.

Le document IT1273728 décrit un palettiseur comprenant un portique constitué de deux colonnes raccordées par une arche. Le palettiseur comprend deux éléments dont l'un est un plateau intermédiaire et l'autre est une structure de dépose. Chacun de ces deux éléments s'étend entre les deux colonnes et présente un coté guidé en translation le long d'une des colonnes. Le côté opposé de chacun de ces éléments est guidé en translation le long de l'autre colonne. Un inconvénient d'un tel palettiseur est que le portique gène l'accès aux deux côtés desdits éléments.

On connaît aussi ITMI941558 qui divulgue un dispositif de transfert de couches pré-conformées d'objets sur le dessus d'une palette standardisée selon le préambule de la revendication 1, où les éléments mobiles verticalement sont montés au sein d'un portique en forme de U renversé, ce qui la rend peu accessible et peu versatile.

Les documents EP 2 112 101 et WO 2010/086292 décrivent également des palettiseurs.

### OBJET ET RESUME DE L'INVENTION :

L'invention propose un dispositif de transfert de couches pré-conformées d'objets sur le dessus d'une palette, ainsi qu'un système de palettisation qui remédient à au moins l'un des inconvénients précités.

Un but de l'invention est d'améliorer l'accessibilité autour des couches à palettiser.

Selon un mode de réalisation, le dispositif de transfert de couches pré-conformées d'objets sur le dessus d'une palette standardisée, comprend :
- une colonne de guidage,
- une tête de dépose conçue pour déposer lesdites couches les unes au dessus des autres sur la palette, et
- un plateau d'accueil d'une couche pré-conformée d'objets, lequel plateau est mobile par rapport à la tête de dépose.

La tête de dépose et le plateau d'accueil sont chacun monté coulissant en porte à faux uniquement sur ladite colonne de guidage.

Le dispositif comprend un moyen d'entraînement de la couche pré-conformée d'objets depuis le plateau d'accueil jusque sur une surface de référence de la tête de dépose.

En outre, la tête de dépose est raccordée mécaniquement à un premier chariot monté coulissant en translation le long d'un moyen de guidage en translation, sur lequel est aussi monté coulissant en translation un deuxième chariot auquel est raccordé mécaniquement le plateau d'accueil.

Autrement dit, le palettiseur lui-même est mono-colonne. Toutefois, le système de palettisation peut comprendre d'autres colonnes pour d'autres organes associés au palettiseur. Le fait que le plateau d'accueil et la tête de dépose soit tous les deux en porte à faux sur une unique colonne laisse l'accès libre sur tous les côtés où ne se trouve pas la colonne. Cela permet d'adjoindre d'autres organes optionnels au palettiseur. De plus, l'implantation dans une usine d'un palettiseur mono-colonne est beaucoup plus rapide et moins coûteuse que l'installation d'un palettiseur sur portique. En effet, contrairement aux deux colonnes du portique qui doivent être ajustées lors de l'installation, la mono-colonne arrive sur le site d'installation avec tous les moyens de coulissement déjà préréglés.

Avantageusement, le moyen d'entraînement est conçu pour pousser la couche préconformée d'objets en translation.

Selon un mode de réalisation, la tête de dépose comprend un tapis. La surface de référence délimite la portion d'une face supérieure du tapis à l'intérieur de laquelle les couches peuvent être positionnées pour être déposées sur la palette.

Avantageusement, la colonne de guidage est fixée au sol et comprend un moyen principal de guidage en translation sur lequel sont montés coulissants un premier chariot, auquel est raccordé la tête de dépose, et un deuxième chariot, auquel est raccordé le plateau d'accueil, le deuxième chariot étant situé entre le premier chariot et le sol. Autrement dit, le deuxième chariot ne peut pas dépasser le premier chariot. Cela permet de profiter du même moyen de guidage pour les deux chariots.

Avantageusement, la tête de dépose est mobile par rapport à la colonne uniquement en translation, sans composante de rotation. Une telle tête de dépose est beaucoup plus simple, plus robuste, moins chère, qu'une tête présentant un degré de liberté en rotation.

Avantageusement, la colonne est immobile par rapport au sol. Autrement dit, la colonne ne pivote pas autour d'un axe, vertical par exemple. La fixation de cette colonne au sol peut être beaucoup plus robuste que si la colonne était mobile. La position dans l'espace des moyens de coulissement de la colonne est également plus précise.

Selon un mode de réalisation, le plateau d'accueil est équipé d'un convoyeur, qui présente une direction de convoyage desdites couches.

Avantageusement, le dispositif comprend une première roue d'entraînement d'un premier lien relié à la tête de dépose, et une deuxième roue d'entraînement d'un deuxième lien relié au plateau d'accueil, l'axe de rotation de la première roue d'entraînement et/ou l'axe de rotation de la deuxième roue d'entraînement étant parallèle à la direction de convoyage des couches. Cette caractéristique permet de disposer facilement un moteur d'entraînement s'étendant en amont et/ou en aval de la mono-colonne par rapport à la direction de convoyage des couches. Cela réduit l'encombrement du palettiseur dans une direction transversale à la direction de convoyage des couches. La possibilité d'avoir cette caractéristique est un avantage supplémentaire du palettiseur mono-colonne. Au contraire, dans le palettiseur à portique décrit par IT 1273728, un arbre commun s'étend d'une colonne à l'autre du portique, et synchronise le coulissement de la tête de dépose le long des deux colonnes du portique. Le moteur d'entraînement de cet arbre commun s'étend lui aussi transversalement, ce qui est encombrant.

Avantageusement, le dispositif comprend un plan de mise à disposition d'un ensemble d'objets à l'état pré-conformé sous forme d'une couche destinée à être transférée puis déposée sur le dessus de la palette. La tête de dépose est montée mobile en translation le long de positions correspondant successivement à chaque hauteur des couches à déposer. Le plateau d'accueil est mobile en translation depuis une hauteur correspondant à la hauteur du plan de mise à disposition jusqu'à une hauteur correspondant à la hauteur en cours de la tête de dépose. Cela permet de faire simultanément plusieurs étapes du procédé de transfert de couches et de réduire le temps de cycle du palettiseur. En effet, la tête de dépose peut rester au voisinage du sommet de la pile de couches déjà chargées sur la palette. Le plateau d'accueil peut alors faire la navette entre le plan de mise à disposition des couches et la tête de dépose pendant que la tête de dépose effectue des opérations propres à la dépose.

Selon un mode de réalisation, la tête de dépose présente une direction d'introduction d'une couche d'objets.

Avantageusement, la tête de dépose est ouverte au-dessus de la surface de référence et/ou sur un côté de la surface de référence par rapport à la direction d'introduction. Cela permet d'accéder à la couche allant être déposée alors que celle-ci ne va quasiment plus bouger. Cela peut permettre par exemple de déposer une feuille intercalaire sur la couche allant être déposée sans avoir besoin de la fixer. Cela peut être avantageusement utilisé lorsque les objets formants la couche à palettiser sont des packs de récipients entourés d'un film rétractable.

Avantageusement, le plateau d'accueil est équipé d'un rouleau d'extrémité de diamètre inférieur à 40 mm, lequel rouleau étant disposé de manière à pouvoir être adjacent au tapis de la tête de dépose, sans plaque de raccordement intermédiaire. Cela permet de réduire le temps de cycle du palettiseur. Il n'est alors pas nécessaire d'inclure dans le cycle une étape de mise en place d'une plaque intermédiaire pour assurer la continuité de support entre le plateau d'accueil et le tapis de la tête de dépose.

Selon un mode de réalisation, la tête de dépose comprend un mécanisme de support et d'entraînement du tapis conçu pour escamoter le tapis, lequel mécanisme comprend deux structures latérales s'étendant de chaque côté du tapis par rapport à la direction d'introduction.

Avantageusement, le dispositif comprend un bras principal reliant la tête de dépose à la colonne de guidage, un bras secondaire amont faisant saillie d'un point d'ancrage du bras principal situé en amont de la surface de référence selon la direction d'introduction, ledit bras secondaire amont étant raccordé à des portions amont des deux structures latérales, le dispositif comprenant en outre un bras secondaire aval faisant saillie d'un point d'ancrage du bras principal situé en aval de la surface de référence selon la direction d'introduction, ledit bras secondaire aval étant raccordé à des portions aval des deux structures latérales. Ce type d'accrochage du mécanisme de support et d'entraînement du tapis permet d'ouvrir la tête de dépose au-dessus et/ou sur le côté de la surface de référence. Le bras principal peut être rigide et monté en translation rectiligne le long de la mono-colonne.

Dans une variante, le bras principal peut être mobile par rapport à la colonne selon une combinaison de translations verticales et/ou horizontales.

Dans une autre variante, le bras principal peut présenter une articulation de rotation autour d'un axe vertical entre le point d'ancrage amont et la colonne.

Avantageusement, chaque structure latérale comprend une plaque -ou un ensemble de plaques- verticale et parallèle à la direction d'introduction, et formant un U, le fond du U s'étendant tout le long de la surface de référence. Cela permet d'améliorer l'accessibilité à la couche d'objets en train d'être déposée sur le dessus de la pile de couches palettisées.

Avantageusement, le dispositif comprend des moyens de centrage-serrage longitudinaux, lesquels moyens sont guidés dans les structures latérales.

Selon un autre aspect, l'invention porte sur un système de palettisation comprenant :
- un dispositif de transfert de couches tel que celui précité,
- un dispositif de préparation de couches, disposé en amont du plateau d'accueil selon une direction de convoyage des couches.

Avantageusement, le système de palettisation comprend un convoyeur de palettes, apte à transporter des palettes orientées par rapport à la direction de convoyage des palettes, soit dans le sens de la longueur, soit dans le sens de la largeur, et un dispositif de dépilage de palettes une par une sur ledit convoyeur de palettes, lequel dispositif de dépilage est conçu pour recevoir soit une pile de palettes orientées par rapport à ladite direction de convoyage dans le sens de la longueur, soit une pile de palettes orientées dans le sens de la largeur.

On entend par dispositif de dépilage de palettes, également appelé « dépileur », un dispositif conçu pour délivrer une par une des palettes issues d'une pile de palettes.

Un tel système de palettisation présente l'avantage de pouvoir palettiser des couches pré-conformées rectangulaires d'objets, que les couches soient orientées avec leur longueur parallèle à la direction de convoyage des couches ou soient orientées avec leur longueur perpendiculaire à la direction de convoyage des couches. Cette flexibilité de palettisation permet d'optimiser le remplissage des couches quelle que soit la taille des objets. Grâce au dépileur capable de recevoir des piles de palettes dans les deux orientations, le système de palettisation n'a pas besoin de faire pivoter de 90° les couches pré-conformées avant de les déposer sur la palette. Cela supprime la consommation d'énergie requise pour un tel pivotement. Cela simplifie le palettiseur et peut réduire le temps de cycle.

Selon un autre aspect, l'invention porte sur une tête de dépose de couches pré-conformées d'objets pour palettiseur, présentant une direction d'introduction des couches d'objets, et comprenant un tapis présentant une surface de référence délimitant la portion d'une face supérieure du tapis à l'intérieur de laquelle les couches peuvent être positionnées pour être déposées, ladite tête de dépose étant ouverte au-dessus de la surface de référence et/ou sur un côté de la surface de référence par rapport à la direction d'introduction.

### BREVE DESCRIPTION DES DESSINS :

La présente invention sera mieux comprise à l'étude de la description détaillée de quelques modes de réalisation pris à titre d'exemples nullement limitatifs et illustrés par les dessins annexés sur lesquels :
- La figure 1 est une vue en perspective du palettiseur.
- La figure 2 est une coupe selon le plan II-II de la figure 1,
- La figure 3 est une vue en perspective de la tête de dépose.
- La figure 4 est un schéma vu de dessus d'un système de palettisation utilisé pour palettiser des couches d'objets orientées longitudinalement.
- La figure 5 est un schéma du dessus du système de palettisation de la figure 4 utilisé pour palettiser des couches d'objets orientées transversalement.
- Les figures 6 à 9 sont des schémas en coupe d'un système de palettisation selon le plan VI-VI de la figure 4, illustrant respectivement une phase de dépôt d'une couche, une phase d'amenée d'une nouvelle couche, une phase d'introduction dans la tête de dépose et une phase de centrage-serrage de la couche.

### DESCRIPTION DETAILLEE :

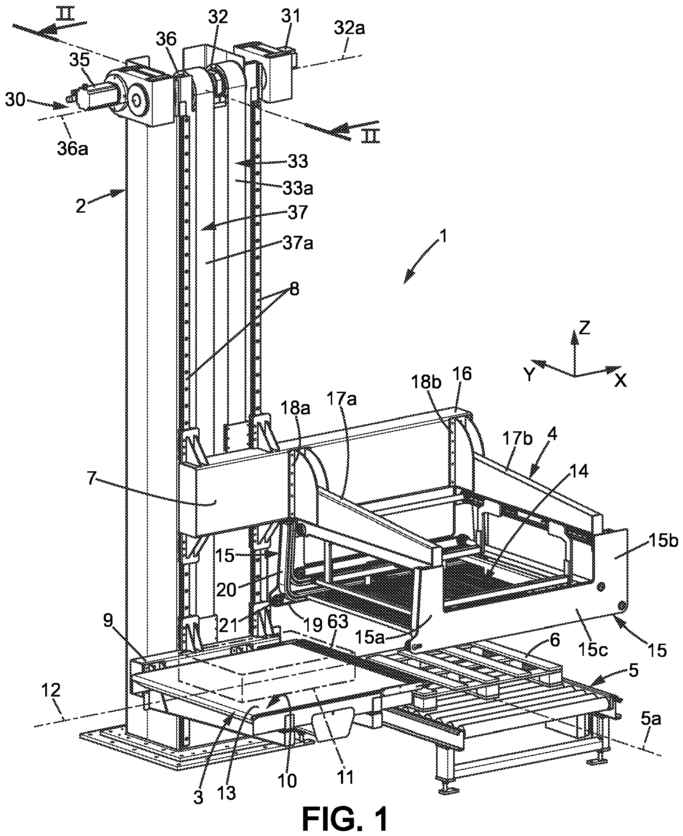

Comme illustré en figure 1, le dispositif 1 de transfert de couches, encore appelé palettiseur **1,** comprend une colonne **2** de guidage, un plateau **3** d'accueil, une tête **4** de dépose et un convoyeur **5** de palettes convoyant ici une palette **6** selon une direction **« y »** horizontale et transversale. La tête 4 de dépose est raccordée mécaniquement à un premier chariot **7** monté coulissant en translation le long d'un moyen de guidage en translation, tel que, par exemple une paire de rails **8.** Les rails 8 sont parallèles et allongés le long de la colonne 2 dans une direction **« z »** verticale.

Le plateau 3 d'accueil est également raccordé mécaniquement à un deuxième chariot **9** monté coulissant en translation le long de la même paire de rails 8. Le plateau 3 d'accueil comprend un convoyeur **10** de couches **11** d'objets. Dans l'exemple, le convoyeur 10 est constitué par un tapis rotatif sans fin s'étendant le long d'un plan **13** de convoyage qui est horizontal et entrainé par un moteur dans une direction **12** de convoyage des couches 11 préformées. La direction 12 de convoyage est parallèle à une direction **« x »** horizontale et longitudinale.

La colonne 2 de guidage comprend un corps creux allongé dont la section droite horizontale est sensiblement rectangulaire et dont la longueur du rectangle est orientée selon la direction « x ». Les rails 8 de guidage sont ancrés à l'extérieur du corps creux et au voisinage des coins du rectangle de la section droite de part et d'autre de la longueur de ce rectangle. Cela permet un écartement entre les rails 8. Pour une même inertie du corps de la colonne 2 de guidage, cela optimise le guidage des chariots 7 et 9. En particulier, cela permet au premier chariot 7 de supporter un double porte à faux de la tête 4 de dépose. En effet, la tête 4 de dépose est à distance de la colonne 2 de guidage, non seulement dans la direction « y » transversale, mais également dans la direction « x » longitudinale. Cela permet au premier chariot 7 de tenir la tête 4 de dépose au dessus du convoyeur 5 de palettes.

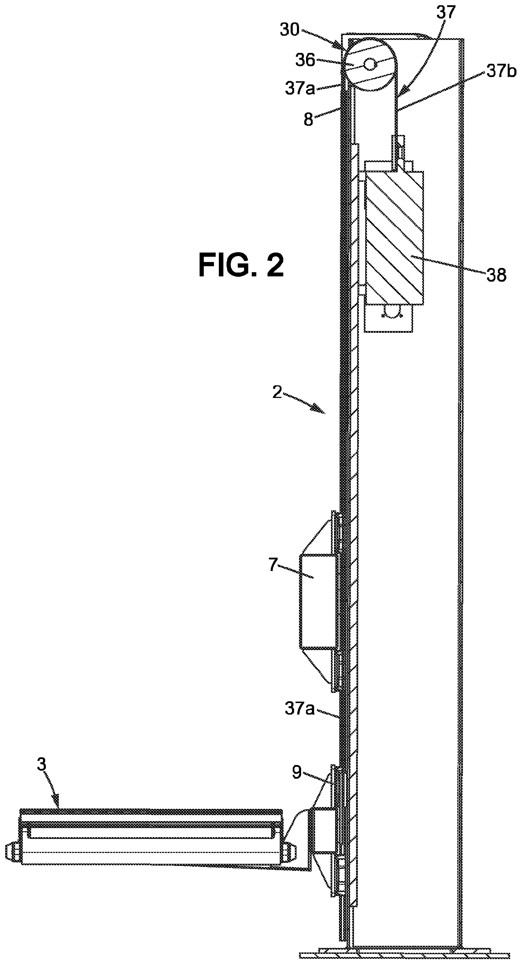

On va à l'aide des figures 1 et 2 décrire des moyens **30** d'entraînement en translation du plateau 3 d'accueil et de la tête 4 de dépose. Les moyens 30 comprennent un premier moteur **31** électrique entrainant, via un réducteur, une première roue **32** d'entraînement. La première roue 32 entraine un lien **33** en forme de courroie, de préférence une courroie plate et/ou crantée, dont un brin **33a** extérieur est raccordé au premier chariot 7 et un brin **33b** intérieur est raccordé à un premier contrepoids **34** (non visible sur les figures, mais cependant référencé pour faciliter la lecture de la description) correspondant au poids de l'ensemble du premier chariot 7 et de la tête 4 de dépose.

De même, les moyens 30 d'entraînement comprennent un deuxième moteur **35** électrique entraînant, via un réducteur, une deuxième roue **36** d'entraînement. La deuxième roue 36 entraine un deuxième lien **37** en forme de courroie, de préférence plate et/ou crantée, dont un brin **37a** extérieur est raccordé au deuxième chariot 9 et un brin **37b** intérieur qui est raccordé à un deuxième contrepoids **38,** correspondant au poids du deuxième chariot 9 et du plateau 3 d'accueil. En fait, comme visible notamment sur la figure 1, les deux liens 33, 37 sont disposés parallèlement l'un à l'autre, de sorte que le brin intérieur 33b du lien 33 entraîné par le premier moteur 31 se déplace parallèlement au brin 37b intérieur du deuxième lien 37 sensiblement dans le même plan que ce brin 37ba intérieur du deuxième lien 37, et le premier contrepoids 34 est raccordé au brin 33b intérieur du lien 33 de la même manière que le second contrepoids 38 est raccordé au brin 37b intérieur du lien 37. En d'autres termes, les premier et second contrepoids 34, 38 se déplacent sur des cheminements parallèles à l'intérieur de la section du corps creux de la colonne 2 de guidage. Ainsi, l'énergie consommée par les premiers et deuxième moteurs 31, 35 sert principalement à vaincre l'inertie des masses en mouvement et à vaincre les frottements.

De manière particulièrement avantageuse, l'axe **32a** de rotation de la première roue 32 et/ou l'axe **36a** de rotation de la deuxième roue 36 est parallèle à la direction 12 de convoyage des couches 11. Ainsi, les brins 33a, 33b et/ou 37a, 37b peuvent présenter une section droite allongée le long de l'axe « x » longitudinal. Cela permet à l'ensemble des moyens 30 d'entraînement en translation de présenter un encombrement dans le sens transversal à la direction 12 de convoyage particulièrement réduit. Cela permet au palettiseur 1 d'être particulièrement compact.

Les brins extérieurs 33a, 37a sont situés entre les deux rails 8 de guidage. Cela permet d'améliorer la compacité transversale du palettiseur 1.

Avantageusement, les première et deuxième roues 32, 36 d'entraînement sont situées au voisinage de l'extrémité haute de la colonne 2 de guidage. Cela permet aux moyens 30 d'entraînement d'être dépourvus de poulie de renvoi et aux liens 33, 37 de ne pas être une boucle fermée. Cela réduit le nombre de composants nécessaires à l'entraînement.

La colonne 2 de guidage comprend en outre, à l'intérieur de la section du corps creux, des guides s'étendant le long de la colonne 2 pour guider les déplacements verticaux des premier et deuxième contrepoids 34, 38, l'un à côté de l'autre sans s'entrechoquer. De plus, cela permet d'utiliser le corps de la colonne 2 de guidage en temps que carénage de protection des contrepoids vis-à-vis de l'opérateur.

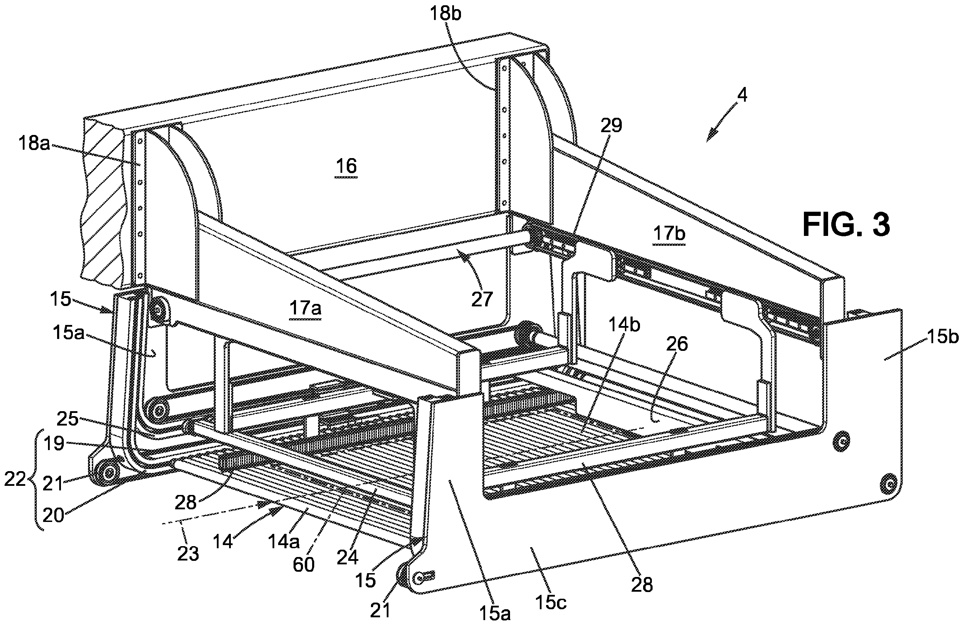

Comme illustré en figure 3, la tête 4 de dépose comprend un tapis **14** de rouleaux s'étendant dans un plan horizontal le long d'une direction **23** d'introduction qui est parallèle à la direction 12 de convoyage des couches.

La tête de dépose comprend une surface **60** de référence au centre du tapis 14 à l'état fermé, qui définit la surface maximale pouvant recevoir une couche 11 (voir ci-dessous).

Le tapis 14 est composé de rouleaux montés libres en rotation. L'axe de rotation de chacun des rouleaux est perpendiculaire à la direction 23 d'introduction des couches 11 d'objets. Le tapis 14 est composé d'un demi-tapis **14a** amont, situé du côté du plateau 3 d'accueil et d'un demi-tapis **14b** aval du côté opposé.

La tête 4 de dépose comprend deux structures **15** latérales verticales, constituées par des plaques en forme de U. Chacune desdites plaques 15 latérales comprend une portion **15a** amont allongée vers le haut et située du côté du plateau 3 d'accueil, une portion **15b** aval allongée vers le haut et située du côté opposé et une portion **15c** principale s'étendant horizontalement entre les portions 15a amont et 15b aval.

La tête 4 de dépose comprend un bras **16** principal s'étendant parallèlement à la direction 23 d'introduction à partir du premier chariot 7. La tête 4 de dépose comprend un bras **17a** secondaire amont, faisant saillie transversalement du bras 16 principal à partir d'un point **18a** d'ancrage amont. Le point 18a d'ancrage amont est situé en amont de la surface 60 de référence. Le bras 17a secondaire amont est raccordé aux extrémités supérieures des portions 15a amont des deux plaques 15 en U. La tête 4 de dépose comprend de même un bras **17b** secondaire aval, faisant saillie transversalement du bras 16 principal à partir d'un point **18b** d'ancrage aval. Le point 18b d'ancrage aval est situé en aval de la surface 60 de référence. Le bras 17b secondaire aval est raccordé aux extrémités supérieures des portions 15b aval des deux plaques 15 latérales.

Chacun des deux demi-tapis 14a et 14b est entrainé par deux courroies **19** latérales d'escamotage, le long de deux demi-glissières **20** latérales d'escamotage, de manière analogue à un volet roulant. Les quatre demi-glissières 20 et des poulies **21** d'entraînement des courroies 19 sont montées sur les plaques 15 latérales correspondantes et constituent avec lesdites plaques 15, un mécanisme **22** de support et d'entraînement du tapis 14. Les plaques 15 sont des structures latérales de ce mécanisme 22.

La tête 4 de dépose comprend en outre une butée **24** amont escamotable s'étendant transversalement au dessus du demi-tapis 14a amont à l'état non escamoté. La butée 24 amont est montée coulissante dans deux glissières **25** latérales et entraînée par une chaine pour être mobile dans la direction 23 d'introduction et escamotable vers le haut. La tête 4 de dépose comprend une butée **26** aval s'étendant transversalement au-dessus du demi-tapis 14b aval à l'état non escamoté. La butée 26 aval est mobile selon la direction 23 d'introduction. Les deux butées 24 amont et 26 aval et les glissières 25 constituent ensemble des moyens 24-25-26 de centrage- serrage longitudinaux qui sont guidés dans les deux structures 15 latérales. Lorsqu'ils sont escamotés, les deux demi-tapis 14a, 14b sont écartés l'un de l'autre et relevés dans les extrémités verticales des glissières 20. Autrement dit, le tapis 14 s'ouvre comme une trappe et laisse tomber la couche 11 qui est retenue par les butées 24 amont et 26 aval.

La tête 4 de dépose comprend des moyens **27** de centrage-serrage transversaux comprenant deux tiges **28** latérales s'étendant longitudinalement et entrainées chacune de manière symétrique par rapport à un plan médian longitudinal et vertical contenant la direction 23 d'introduction. Lesdits moyens 27 de centrage-serrage transversaux comprennent un mécanisme **29** de glissière et de courroie intégré dans chacun des bras 17a, 17b secondaires.

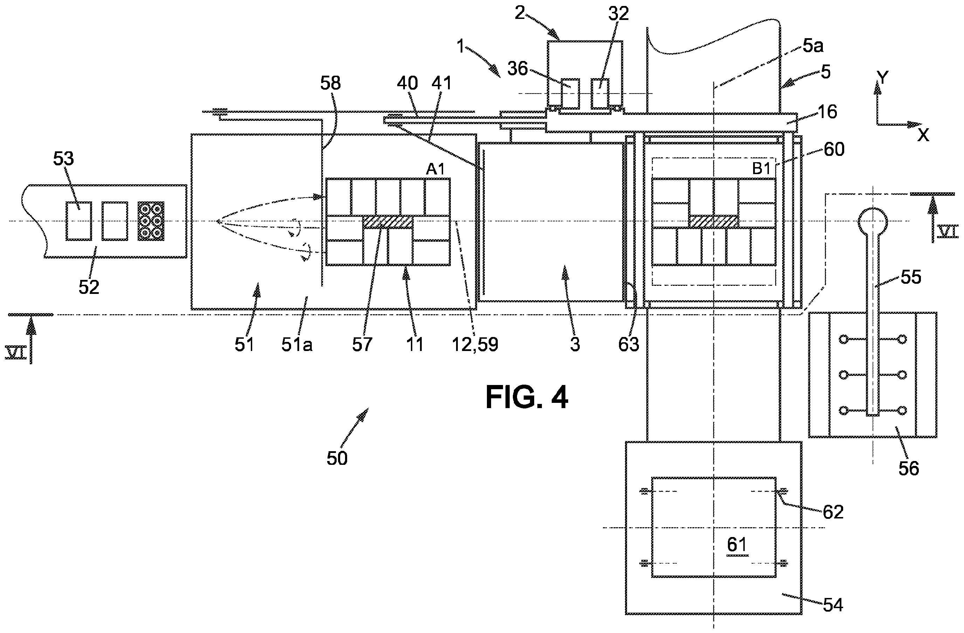

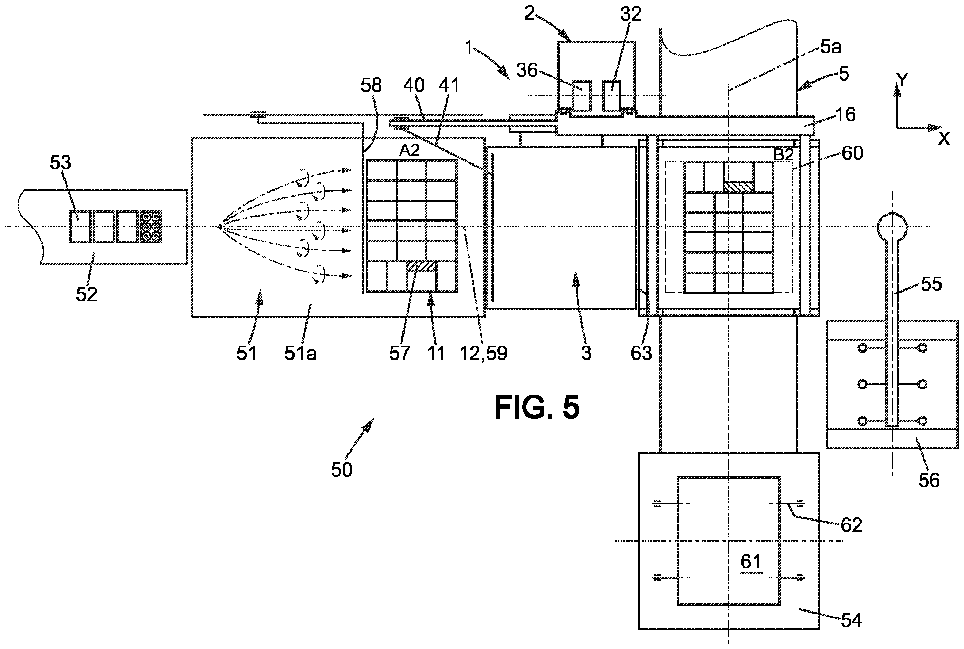

On va à l'aide des figures 4 et 5 décrire un système **50** de palettisation qui comprend, en plus du palettiseur 1 précédemment décrit et du convoyeur 5 de palettes 6, un dispositif **51** de préparation de couches 11 disposé en amont du plateau 3 d'accueil selon la direction 12 de convoyage des couches 11, un convoyeur **52** unifilaire d'objets 53 disposé en amont du dispositif 51 et un dépileur **54** de palettes 6 disposé en amont du convoyeur 5 de palettes selon la direction 5a de convoyage des palettes 6.

Le système 50 de palettisation peut optionnellement comprendre un bras **55** d'amenée de feuilles **56** intercalaires.

Les objets **53** à palettiser sont typiquement des packs individuels occupant un volume sensiblement parallélépipédique. Ces packs 53 individuels comprennent par exemple des canettes ou des bouteilles regroupées, par exemple par six comme illustré, et rendues compactes et sensiblement rigides par un film thermorétractable. Les packs 53 peuvent alternativement être constitués par des objets quelconques résistant à la pression verticale et regroupés dans un carton également sensiblement parallélépipédique.

On comprend que le but de la palettisation est de déposer le maximum de packs 53 individuels sur une couche 11 de palettes. Appelons **« l »** et **« w »** respectivement la longueur et la largeur horizontales du pack 53 individuel. Les palettes 6 sont généralement rectangulaires et de dimensions standardisées, par exemple, 800 x 1200 mm en Europe, 1000 x 1200 mm aux USA. Appelons **« L »** et **« W »** respectivement la longueur et la largeur des palettes 6. Le nombre de packs 53 susceptibles d'être mis dans une couche 11 correspond sensiblement à la partie entière du rapport (L.W) / (l.w). Il reste généralement un espace **57** non utilisable.

Le dispositif 51 de préparation des couches 11 reçoit les packs 53 du convoyeur 52 unifilaire et dévie certains packs 53 selon une trajectoire, sans les faire pivoter, et en dévie d'autres en les faisant pivoter de 90° autour d'un axe vertical, et ceci de manière à parvenir à un arrangement globalement rectangulaire dans lequel les packs 53 sont disposés côte à côte. L'arrangement des packs 53 est tel que la couche 11 d'objets puisse être poussée en bloc par un poussoir **58** sans que la couche ne se déforme, c'est-à-dire sans que des objets 53 puissent venir dans l'espace 57 non utilisé.

La figure 4 illustre un premier type d'arrangement de couches 11 dans lequel seule l'orientation longitudinale de la couche 11 permet d'éviter à cette couche d'être déformée sous l'action du poussoir 58. Cet arrangement longitudinal est celui dans lequel la longueur du rectangle de la couche 11 est parallèle à la direction 12 de convoyage.

La figure 5 illustre un deuxième type d'arrangement de la couche 11 dans lequel seule l'orientation transversale de la couche 11 permet d'éviter à cette couche d'être déformée sous l'action du poussoir 58. Cet arrangement transversal est tel que la longueur du rectangle de la couche 11 est perpendiculaire à la direction 12 de convoyage. De plus, à chacun des deux types d'arrangements (longitudinal ou transversal) correspond deux arrangements **A, B** symétriques l'un de l'autre par rapport à un plan **59** de symétrie, lequel plan 59 s'étend verticalement et contient la direction 12 de convoyage.

L'optimisation du remplissage de la couche 11 d'objets 53 impose au système 50 de palettisation de pouvoir déposer, les unes au-dessus des autres, des couches 11 qui sont orientées soit longitudinalement, soit transversalement.

La surface 60 de référence de la tête 4 de dépose est carrée, par exemple de taille 1300 x 1300mm. Ainsi la surface 60 de référence est apte à recevoir des couches 11, que celles-ci soient orientées longitudinalement ou transversalement. Que l'on soit dans la configuration longitudinale (figure 4) ou transversale (figure 5), une première étape consiste à amener la couche 11 pré-conformée, depuis le dispositif 51 de préparation de la couche jusqu'au plateau 3 d'accueil, par exemple sous l'action du poussoir 58.

Dans une deuxième étape, le palettiseur 1 entraine la couche 11 depuis le plateau 3 d'accueil jusque sur la surface 60 de référence grâce à un moyen **40** d'entraînement, qui n'a pas été illustré aux figures 1 à 3 et qui est représenté aux autres figures sous la forme fonctionnelle d'une prolongation du bras 16 principal le long duquel un poussoir **41** est entraîné en translation.

Dans une troisième étape, les butées 24 amont et 26 aval, ainsi que le moyen 27 de serrage-centrage transversal (voir figure 3) permettent de centrer la couche 11 au centre de la surface 60 de référence, quelle que soit l'orientation longitudinale ou transversale de cette couche 11.

Dans une quatrième étape, l'escamotage du tapis 14 de rouleaux libres permet de déposer la couche 11 rectangulaire sur une palette 6 rectangulaire et orientée de la même manière.

Le dépileur 54 du système 50 de palettisation est conçu pour recevoir des piles **61** de palettes 6 dont l'ensemble des palettes rectangulaires présentent leur longueur, soit orientée perpendiculairement, soit parallèlement à la direction 5a de convoyage des palettes 6. Le dépileur 54 présente à cet effet des doigts **62** rétractables suffisamment longs pour retenir l'ensemble de la pile 61 des palettes, quelle que soit l'orientation de la pile 61.

Pour une taille l.w donnée des objets 53 à palettiser, un arrangement optimal de couches 11 est déterminé. Ensuite, le dispositif 51 de préparation de la couche 11 est programmé en fonction de l'arrangement à réaliser. Si cet arrangement optimal est de type longitudinal (figure 4), l'opérateur introduit une pile 61 de palettes 6 toutes orientées avec une longueur perpendiculaire à la direction 5a de convoyage des palettes 6 et parallèle à la direction 12 de convoyage des couches 11. Le dispositif 51 de préparation des couches 11 produit alors une succession de couches 11, toutes du même type longitudinal et alternées de manière que deux couches 11 successives présentent des arrangements **A1, B1** symétriques l'un de l'autre par rapport au plan 59 de symétrie. De même, si l'arrangement optimal est de type transversal (figure 5), l'opérateur introduit une pile 61 de palettes 6, toutes orientées avec une longueur parallèle à la direction 5a de convoyage de palettes et perpendiculaire à la direction 12 de convoyage des couches 11. Le dispositif 51 de préparation des couches produit alors une succession de couches 11, toutes du même type transversal et alternées de manière que deux couches 11 successives présentent des arrangements **A2, B2,** symétriques l'un de l'autre par rapport au plan 59 de symétrie.

On comprend qu'un tel système 50 de palettisation est flexible pour s'adapter à tout type d'objets 53 à palettiser, sans pour autant être contraint de faire pivoter l'ensemble des couches 11 pré-conformées. Un tel système 50 de palettisation est à la fois plus simple, car il est dépourvu de moyens de mise en rotation des couches 11, et plus économique, car il n'y a pas d'énergie cinétique de rotation à communiquer aux couches 11 pré-conformées.

Par ailleurs, de manière optionnelle, si les packs 53 sont constitués de récipients retenus par un film rétractable, le fond de chacun des packs 53 n'est généralement pas plat. Le bras 55 amène une feuille 56 intercalaire entre deux couches 11 successives. Cela évite que les récipients glissent horizontalement les uns par rapport aux autres. Cela donne de la cohésion à la pile de couches 11 palettisées. Cette étape optionnelle est réalisée de manière très simple et en temps masqué pendant la phase de centrage-serrage longitudinal et transversal. L'aspect ouvert sur le dessus et sur le devant de la tête 4 de dépose permet d'insérer une feuille intercalaire sans allonger le temps de cycle du système 50 de palettisation.

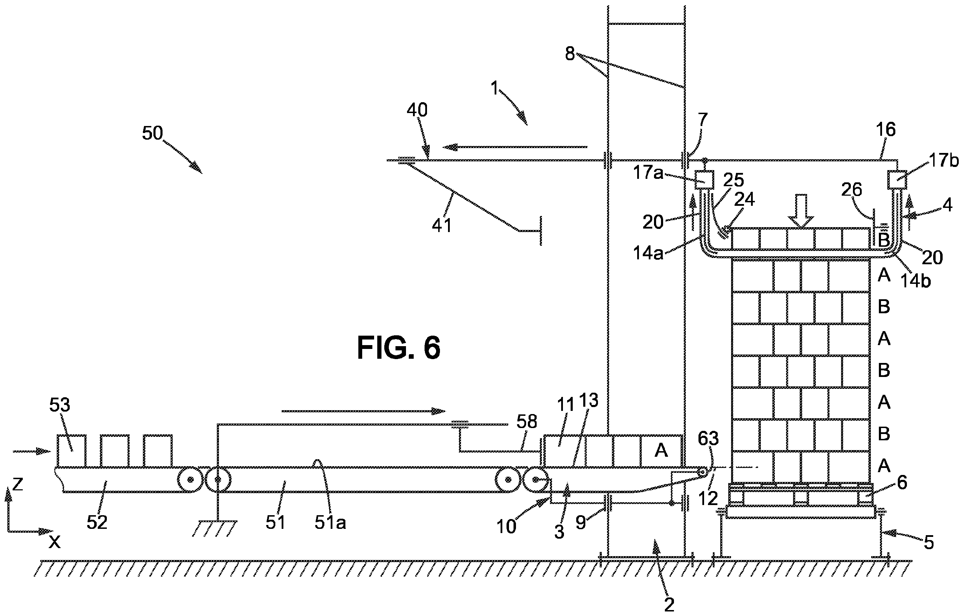

On va à l'aide des figures 6 à 9 décrire le procédé de transfert des couches 11 pré-conformées d'objets 53 depuis le dispositif 51 de préparation des couches 11 jusqu'à la palette 6.

La figure 6 illustre le palettiseur 1 au moment où la tête 4 de dépose vient de déposer une couche 11 précédente ayant un arrangement A. Dans cette situation, les deux demi-tapis 14a, 14b sont escamotés le long des glissières 20 latérales d'escamotage et la butée 24 amont est encore en place. Le plateau 3 d'accueil est situé de manière que le plan 13 de convoyage du convoyeur 10 soit aligné avec le plan 51a de mise à disposition du dispositif 51 de préparation des couches.

Dans une première étape, le poussoir 58 du dispositif 51 pousse sur le plateau 3 d'accueil, la prochaine couche 11 ayant un arrangement B symétrique de l'arrangement A de la couche 11 précédente.

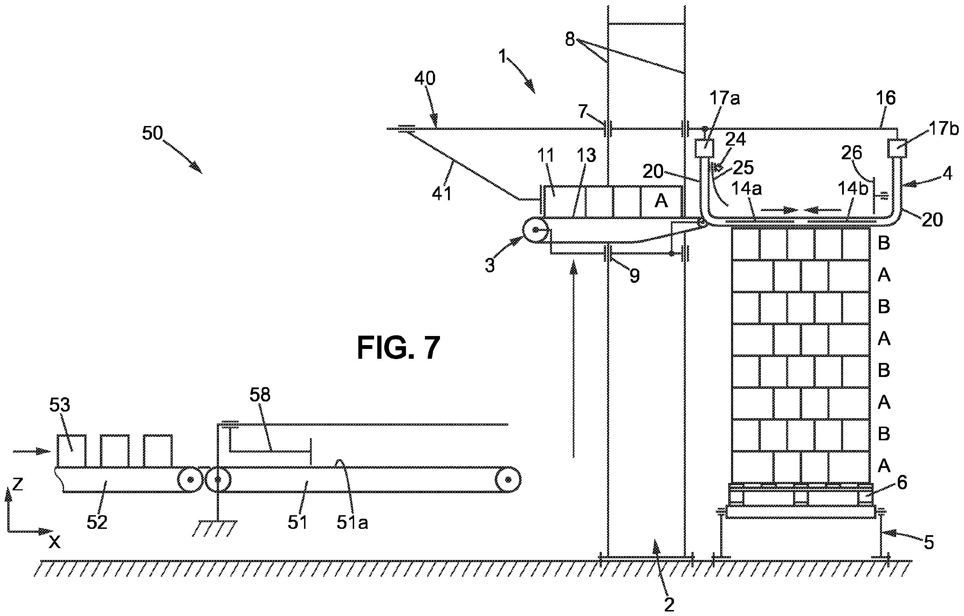

Dans une deuxième étape illustrée en figure 7, la tête 4 de dépose est relevée à une hauteur immédiatement au-dessus de la couche 11 précédemment déposée. Dans une troisième étape, les deux demi-tapis 14 de rouleaux libres sont remis en place et la butée 24 amont est remontée simultanément à une hauteur supérieure à l'épaisseur des couches 11 de manière que la tête 4 de dépose puisse recevoir la nouvelle couche 11. En temps masqué durant la deuxième et/ou la troisième étape, le poussoir 58 est retiré pour libérer le plateau 3 d'accueil. Ce dernier est alors déplacé verticalement pour que le plan 13 de convoyage soit aligné avec le tapis 14 de rouleaux libres. Si le plan de la palette 6 est au-dessous du plan 51a de mise à disposition du dispositif 51 de préparation de la couche 11, le mouvement mentionné ci-dessus du plateau 3 d'accueil peut avoir lieu vers le bas tant que le niveau des couches 11 déjà déposées n'a pas atteint le niveau du dispositif 51. Dans les autres cas, le mouvement mentionné ci-dessus est dirigé vers le haut.

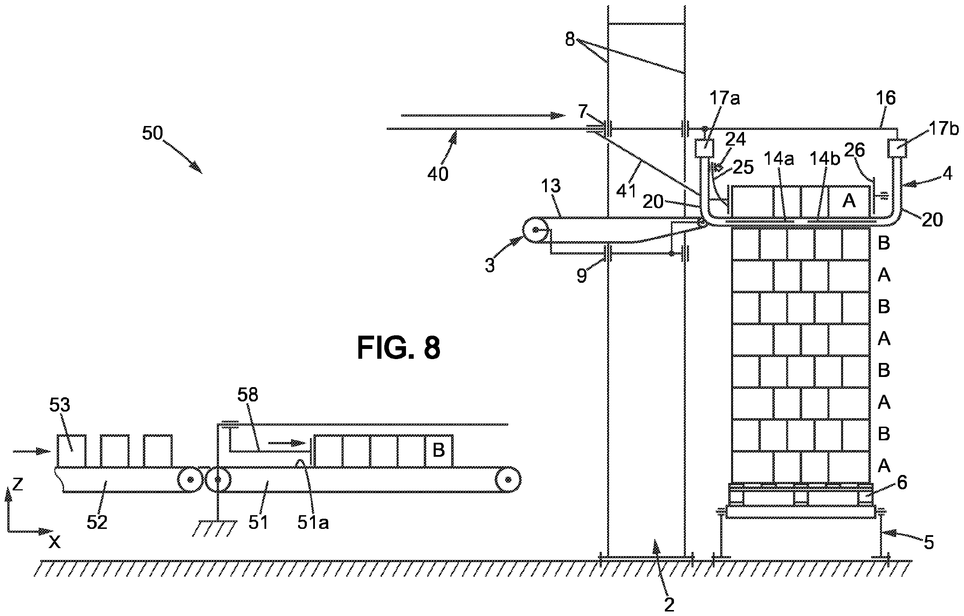

Dans une quatrième étape illustrée en figure 8, le poussoir 41 de la tête 4 de dépose pousse la nouvelle couche 11 depuis le plateau 3 d'accueil jusque sur le tapis 14 de rouleaux libres. Une variante du palettiseur 1 peut comprendre tout autre moyen de transfert de la couche 11 depuis le plateau 3 d'accueil jusqu'à la surface 60 de référence. Pendant ce temps, le dispositif 51 de préparation a préparé la couche 11 suivante.

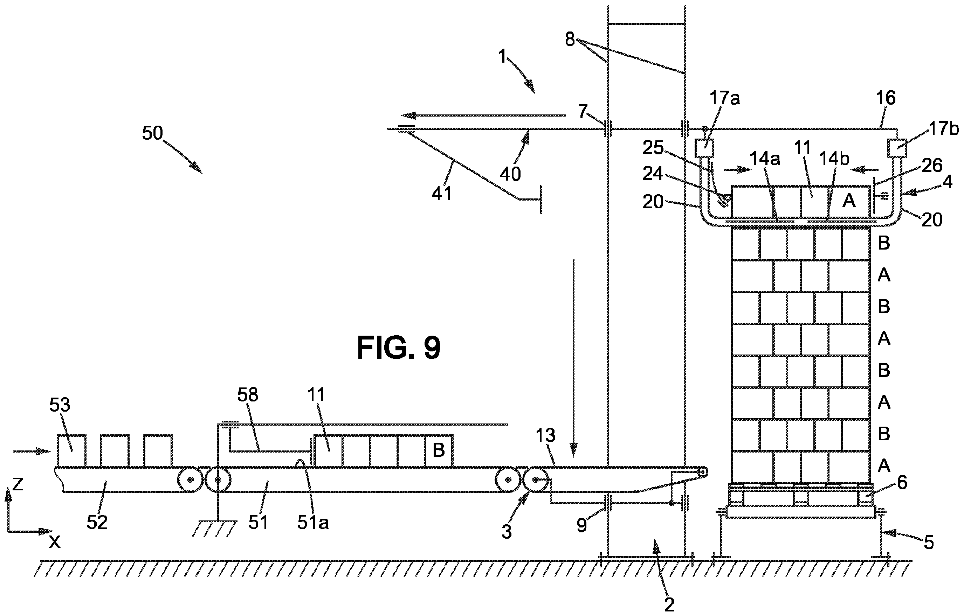

Dans une cinquième étape illustrée en figure 9, le poussoir 41 est rétracté et la butée 24 amont est redescendue au niveau de la nouvelle couche 11 à déposer. Dans une sixième étape, les butées 24 amont et 26 aval sont entrainées longitudinalement pour serrer-centrer longitudinalement la couche 11. Le moyen 27 de serrage-centrage transversal peut être actionné simultanément pendant le serrage-centrage longitudinal. Dans une septième étape, les deux demi-tapis 14a, 14b sont escamotés dans leur direction longitudinale respective, pendant que les butées 24 amont et 26 aval retiennent longitudinalement la nouvelle couche 11 qui est alors déposée sur la précédente. Pendant la cinquième et/ou la sixième et/ou la septième étape, le plateau 3 d'accueil est redescendu au niveau du plan 51a de mise à disposition des futures couches 11.

On comprend que la présence du plateau 3 d'accueil permet d'effectuer en parallèle les trajets de montée et de descente du plateau 3 d'accueil pendant des étapes spécifiques à la tête 4 de dépose. Cette réalisation en parallèle des tâches permet de réduire fortement le temps de cycle de palettisation.

Comme illustré aux figures 1, 7, 8 et 9, le plateau 3 d'accueil est équipé d'au moins un rouleau **63** d'extrémité de diamètre inférieur à 40 mm et disposé horizontalement de manière à être adjacent au tapis 14 lorsque le plateau 3 d'accueil est à une hauteur correspondant à la tête 4 de dépose. Comme illustré en figure 7, la fin de la remontée du plateau 3 d'accueil est actionnée pour être postérieure et proche de la fin de remise en place du tapis 14. De même, comme illustré aux figures 8 et 9, le début d'escamotage du tapis 14 est actionné pour être postérieur et proche du début de la descente du plateau 3 d'accueil. Cette synchronisation évite d'ajouter une étape supplémentaire de mise en place d'une plaque de raccordement entre le plateau 3 d'accueil et le tapis 14. Cela permet encore de réduire le temps de cycle de palettisation.

## Revendications

1. Dispositif (1) de transfert de couches (11) pré-conformées d'objets (53) sur le dessus d'une palette (6) standardisée, comprenant :
- une colonne (2) de guidage,
- une tête (4) de dépose conçue pour déposer lesdites couches (11) les unes au dessus des autres sur la palette (6),
- un plateau (3) d'accueil d'une couche (11) pré-conformée d'objets (53), lequel plateau (3) d'accueil est mobile par rapport à la tête (4) de dépose, et
- un moyen d'entraînement de la couche (11) pré-conformée d'objets depuis le plateau (3) d'accueil jusque sur une surface (60) de référence de la tête (4) de dépose
**caractérisé en ce que** la tête (4) de dépose et le plateau (3) d'accueil sont chacun monté coulissant en porte à faux uniquement sur ladite colonne (2) de guidage, la tête (4) de dépose étant raccordée mécaniquement à un premier chariot (7) monté coulissant en translation le long d'un moyen de guidage en translation, sur lequel est aussi monté coulissant en translation un deuxième chariot (9) auquel est raccordé mécaniquement le plateau (3) d'accueil.

2. Dispositif selon la revendication 1, dans lequel le moyen d'entraînement est conçu pour pousser la couche (11) pré-conformée d'objets en translation.

3. Dispositif selon l'une des revendications précédentes, dans lequel la tête (4) de dépose comprend un tapis (14), et dans lequel la surface (60) de référence délimite la portion d'une face supérieure du tapis (14) à l'intérieur de laquelle les couches (11) peuvent être positionnées pour être déposées sur la palette (6).

4. Dispositif selon la revendication 3, dans lequel le plateau (3) d'accueil présente un plan (13) de convoyage, et dans lequel le moyen d'entraînement est actionné lorsque le plan (13) de convoyage est aligné avec le tapis (14).

5. Dispositif selon l'une des revendications précédentes, dans lequel la tête (4) de dépose est mobile par rapport à la colonne (2) uniquement en translation, sans composante de rotation et/ou dans lequel la colonne (2) est immobile par rapport au sol.

6. Dispositif selon l'une des revendications précédentes, dans lequel le plateau (3) d'accueil est équipé d'un convoyeur (10), qui présente une direction (12) de convoyage desdites couches (11), le dispositif comprenant une première roue (32) d'entraînement d'un premier lien (33) relié à la tête (4) de dépose, et une deuxième roue (36) d'entraînement d'un deuxième lien (37) relié au plateau (3) d'accueil, l'axe (32a) de rotation de la première roue (32) d'entraînement et/ou l'axe (36a) de rotation de la deuxième roue (36) d'entraînement étant parallèle à la direction (12) de convoyage des couches (11) .

7. Dispositif selon l'une des revendications précédentes, comprenant un plan (51a) de mise à disposition d'un ensemble d'objets (53) à l'état pré-conformé sous forme d'une couche (11) destinée à être transférée puis déposée sur le dessus de la palette (6) ; la tête (4) de dépose étant montée mobile en translation le long de positions correspondant successivement à chaque hauteur des couches (11) à déposer, le plateau (3) d'accueil étant mobile en translation depuis une hauteur correspondant à la hauteur du plan (51a) de mise à disposition jusqu'à une hauteur correspondant à la hauteur en cours de la tête (4) de dépose.

8. Dispositif selon l'une des revendications précédentes, dans lequel la tête (4) de dépose est ouverte au-dessus de la surface (60) de référence et/ou sur un côté de la surface (60) de référence par rapport à une direction (23) d'introduction de la couche (11) pré-conformée d'objets dans la tête (4) de dépose.

9. Dispositif selon la revendication 2, dans lequel le plateau (3) d'accueil est équipé d'un rouleau (63) d'extrémité de diamètre inférieur à 40 mm, lequel rouleau est disposé de manière à pouvoir être adjacent au tapis (14) de la tête (4) de dépose.

10. Dispositif selon l'une des revendications 2 ou 9, dans lequel la tête (4) de dépose comprend un mécanisme (22) de support et d'entraînement du tapis (14) conçu pour escamoter le tapis (14), lequel mécanisme (22) comprend deux structures (15) latérales s'étendant de chaque côté du tapis (14) par rapport à une direction (23) d'introduction de la couche (11) pré-conformée d'objets dans la tête (4) de dépose.

11. Dispositif selon la revendication 10, comprenant un bras (16) principal reliant la tête (4) de dépose à la colonne (2) de guidage, un bras (17a) secondaire amont faisant saillie d'un point (18a) d'ancrage du bras (16) principal situé en amont de la surface (60) de référence selon la direction (23) d'introduction, ledit bras (17a) secondaire amont étant raccordé à des portions (15a) amont des deux structures (15) latérales, le dispositif comprenant en outre un bras (17b) secondaire aval faisant saillie d'un point (18b) d'ancrage du bras (16) principal situé en aval de la surface (60) de référence selon la direction (23) d'introduction, ledit bras (17b) secondaire aval étant raccordé à des portions (15b) aval des deux structures (15) latérales.

12. Dispositif selon l'une des revendications 10 ou 11, dans lequel chaque structure (15) latérale comprend une plaque -ou un ensemble de plaques- verticale et parallèle à la direction (23) d'introduction, et formant un U, le fond (15c) du U s'étendant tout le long de la surface (60) de référence ; et/ou dans lequel le dispositif comprend des moyens (24-25-26)) de centrage-serrage longitudinaux, lesquels moyens sont guidés dans les structures (15) latérales.

13. Dispositif selon l'une des revendications précédentes, dans lequel le plateau (3) d'accueil et la surface (60) de référence présentent chacun une surface incluant un rectangle de 800x1200 mm.

14. Système de palettisation comprenant :
- un dispositif (1) de transfert de couches (11) selon l'une des revendications précédentes,
- un dispositif (51) de préparation de couches (11) disposé en amont du plateau (3) d'accueil selon une direction (12) de convoyage des couches (11).

15. Système selon la revendication 14 comprenant :
- un convoyeur (5) de palettes (6), apte à transporter des palettes (6) orientées par rapport à la direction (5a) de convoyage des palettes (6) soit dans le sens de la longueur, soit dans le sens de la largeur, et
- un dispositif (54) de dépilage de palettes (6) une par une sur ledit convoyeur (5) de palettes, lequel dispositif (54) de dépilage est conçu pour recevoir soit une pile (61) de palettes (6) orientées par rapport à ladite direction (5a) de convoyage dans le sens de la longueur, soit une pile (61) de palettes orientées dans le sens de la largeur.

## Patentansprüche

1. Vorrichtung (1) zur Übertragung von vorgeformten Schichten (11) von Objekten (53) auf das obere Ende einer standardisierten Palette (6), umfassend:
- eine Führungssäule (2),
- einen Ablagekopf (4), der eingerichtet ist, um die Schichten (11) übereinander auf der Palette (6) abzulegen,
- eine Aufnahmeplatte (3) einer vorgeformten Schicht (11) von Objekten (53), wobei die Aufnahmeplatte (3) in Bezug zum Ablagekopf (4) beweglich ist, und
- ein Antriebsmittel der vorgeformten Schicht (11) von Objekten von der Aufnahmeplatte (3) bis zu einer Referenzfläche (60) des Ablagekopfes (4),
**dadurch gekennzeichnet, dass** der Ablagekopf (4) und die Aufnahmeplatte (3) jeweils freitragend gleitend nur auf der Führungssäule (2) montiert sind, wobei der Ablagekopf (4) mechanisch an einen ersten Wagen (7) angeschlossen ist, der in Translation gleitend entlang eines Translationsführungsmittels montiert ist, auf dem auch in Translation gleitend ein zweiter Wagen (9) montiert ist, an den die Aufnahmeplatte (3) mechanisch angeschlossen ist.

2. Vorrichtung nach Anspruch 1, bei der das Antriebsmittel eingerichtet ist, um die vorgeformte Schicht (11) von Objekten in Translation zu schieben.

3. Vorrichtung nach einem der vorhergehenden Ansprüche, bei der der Ablagekopf (4) ein Förderband (14) umfasst, und bei der die Referenzfläche (60) den Abschnitt einer Oberseite des Förderbandes (14) begrenzt, innerhalb welcher die Schichten (11) positioniert werden können, um auf der Palette (6) abgelegt zu werden.

4. Vorrichtung nach Anspruch 3, bei der die Aufnahmeplatte (3) eine Förderebene (13) aufweist, und bei der das Antriebsmittel betätigt wird, wenn die Förderebene (13) mit dem Förderband (14) ausgerichtet ist.

5. Vorrichtung nach einem der vorhergehenden Ansprüche, bei der der Ablagekopf (4) in Bezug zur Säule (2) nur in Translation, ohne Rotationskomponente, beweglich ist, und/oder bei der die Säule (2) in Bezug zum Boden unbeweglich ist.

6. Vorrichtung nach einem der vorhergehenden Ansprüche, bei der die Aufnahmeplatte (3) mit einem Förderer (10) ausgestattet ist, der eine Förderrichtung (12) der Schichten (11) aufweist, wobei die Vorrichtung ein erstes Antriebsrad (32) einer ersten Verbindung (33), die mit dem Ablagekopf (4) verbunden ist, und ein zweites Antriebsrad (36) einer zweiten Verbindung (37), die mit der Aufnahmeplatte (3) verbunden ist, umfasst, wobei die Rotationsachse (32a) des ersten Antriebsrads (32) und/oder die Rotationsachse (36a) des zweiten Antriebsrads (36) zur Förderrichtung (12) der Schichten (11) parallel ist.

7. Vorrichtung nach einem der vorhergehenden Ansprüche, umfassend eine Ebene (51a) zur Bereitstellung einer Gesamtheit von Objekten (53) im vorgeformten Zustand in Form einer Schicht (11), die dazu bestimmt ist, übertagen und dann auf dem oberen Ende der Palette (6) abgelegt zu werden; wobei der Ablagekopf (4) in Translation entlang von Positionen beweglich ist, die nacheinander jeder Höhe der abzulegenden Schichten (11) entsprechen, wobei die Aufnahmeplatte (3) in Translation von einer Höhe entsprechend der Höhe der Bereitstellungsebene (51a) bis zu einer Höhe entsprechend der laufenden Höhe des Ablagekopfes (4) beweglich ist.

8. Vorrichtung nach einem der vorhergehenden Ansprüche, bei der der Ablagekopf (4) über der Referenzfläche (60) und/oder auf einer Seite der Referenzfläche (60) in Bezug zu einer Einführrichtung (23) der vorgeformten Schicht (11) von Objekten in den Ablagekopf (4) geöffnet wird.

9. Vorrichtung nach Anspruch 2, bei der die Aufnahmeplatte (3) mit einer Endwalze (63) mit einem Durchmesser unter 40 mm ausgestattet ist, wobei die Walze derart angeordnet ist, dass sie an das Förderband (14) des Ablagekopfes (4) angrenzen kann.

10. Vorrichtung nach einem der Ansprüche 2 oder 9, bei der der Ablagekopf (4) einen Trag- und Antriebsmechanismus (22) des Förderbandes (14) umfasst, der eingerichtet ist, um das Förderband (14) einzuziehen, wobei der Mechanismus (22) zwei seitliche Strukturen (15) umfasst, die sich auf jeder Seite des Förderbandes (14) in Bezug zu einer Einführrichtung (23) der vorgeformten Schicht (11) von Objekten in den Ablagekopf (4) erstrecken.

11. Vorrichtung nach Anspruch 10, umfassend einen Hauptarm (16), der den Ablagekopf (4) mit der Führungssäule (2) verbindet, einen stromaufwärtigen Hilfsarm (17a), der an einem Verankerungspunkt (18a) des Hauptarms (16), der sich stromaufwärts zu der Referenzfläche (60) in Einführrichtung (23) erstreckt, überragt, wobei der stromaufwärtige Hilfsarm (17a) an stromaufwärtige Abschnitte (15a) der zwei seitlichen Strukturen (15) angeschlossen ist, wobei die Vorrichtung ferner einen stromabwärtigen Hilfsarm (17b) umfasst, der an einem Verankerungspunkt (18b) des Hauptarms (16), der sich stromabwärts zu der Referenzfläche (60) in Einführrichtung (23) erstreckt, überragt, wobei der stromabwärtige Hilfsarm (17b) an stromabwärtige Abschnitte (15b) der zwei seitlichen Strukturen (15) angeschlossen ist.

12. Vorrichtung nach einem der Ansprüche 10 oder 11, bei der jede seitliche Struktur (15) eine vertikale Platte - oder Platteneinheit - parallel zur Einführrichtung (23) umfasst, die ein U bildet, wobei sich der Boden (15c) des U entlang der gesamten Referenzfläche (60) erstreckt; und/oder bei der die Vorrichtung Mittel (24-25-26) zum Zentrieren-Längseinspannen umfasst, wobei die Mittel in den seitlichen Strukturen (15) geführt werden.

13. Vorrichtung nach einem der vorhergehenden Ansprüche, bei der die Aufnahmeplatte (3) und die Referenzfläche (60) jeweils eine Fläche aufweisen, die ein Rechteck von 800 x 1200 mm einschließt.

14. Palettierungssystem, umfassend:
- eine Vorrichtung (1) zur Übertragung von Schichten (11) nach einem der vorhergehenden Ansprüche,
- eine Vorrichtung (51) zur Vorbereitung von Schichten (11), die stromaufwärts zur Aufnahmeplatte (3) in einer Förderrichtung (12) der Schichten (11) angeordnet ist.

15. System nach Anspruch 14, umfassend:
- einen Förderer (5) von Paletten (6), der geeignet ist, in Bezug zur Förderrichtung (5a) der Paletten (6) ausgerichtete Paletten (6) entweder in Längenrichtung oder in Breitenrichtung zu befördern, und
- eine Vorrichtung (54) zum Ausbreiten von Paletten (6) einzeln auf dem Palettenförderer (5), wobei die Ausbreitungsvorrichtung (54) eingerichtet ist, um entweder einen Stapel (61) von Paletten (6), die in Bezug zur Förderrichtung (5a) in Längenrichtung ausgerichtet sind, oder einen Stapel (61) von Paletten, die in Breitenrichtung ausgebreitet sind, aufzunehmen.

## Claims

1. Device (1) for transferring pre-conformed layers (11) of objects (53) onto the top of a standardized pallet (6), comprising:
- a guide column (2),
- a deposition head (4) designed to deposit said layers (11) one on top of the other on the pallet (6),
- a plate (3) to receive a pre-conformed layer (11) of objects (53), which receiving plate (3) is mobile relative to the deposition head (4), and
- a means for driving the pre-conformed layer (11) of objects from the receiving plate (3) to a reference surface (60) of the deposition head (4),
**characterized in that** the deposition head (4) and the receiving plate (3) are each mounted cantilever fashion to slide only on said guide column (2), the deposition head (4) being mechanically connected to a first carriage (7) mounted to slide in translation along a translation guide means, on which is also mounted to slide in translation a second carriage (9) to which the receiving plate (3) is mechanically connected.

2. Device according to Claim 1, in which the drive means is designed to push the pre-conformed layer (11) of objects in translation.

3. Device according to either one of the preceding claims, in which the deposition head (4) comprises a mat (14) and in which the reference surface (60) delimits the portion of an upper face of the mat (14) inside which the layers (11) may be positioned to be deposited on the pallet (6).

4. Device according to Claim 3, in which the receiving plate (3) features a conveying plane (13) and in which the drive means is actuated when the conveying plane (13) is aligned with the mat (14).

5. Device according to any one of the preceding claims, in which the deposition head (4) is mobile relative to the column (2) only in translation with no rotation component and/or in which the column (2) is immobile relative to the ground.

6. Device according to any one of the preceding claims, in which the receiving plate (3) is equipped with a conveyor (10) that has a direction (12) of conveying said layers (11), the device comprising a first wheel (32) driving a first link (33) connected to the deposition head (4) and a second wheel (36) driving a second link (37) connected to the receiving plate (3), the rotation axis (32a) of the first drive wheel (32) and/or the rotation axis (36a) of the second drive wheel (36) being parallel to the direction (12) of conveying the layers (11).

7. Device according to any one of the preceding claims, comprising a plane (51a) for disposition of a set of objects (53) in the pre-conformed state in the form of a layer (11) intended to be transferred and then deposited on the top of the pallet (6), the deposition head (4) being mounted to be mobile in translation along positions successively corresponding to each height of the layers (11) to be deposited, the receiving plate (3) being mobile in translation from a height corresponding to the height of the disposition plane (51a) to a height corresponding to the current height of the deposition head (4).

8. Device according to any one of the preceding claims, in which the deposition head (4) is open above the reference surface (60) and/or on one side of the reference surface (60) relative to a direction (23) of introduction of the pre-conformed layer (11) of objects into the deposition head (4).

9. Device according to Claim 2, in which the receiving plate (3) is equipped with an end roller (63) having a diameter less than 40 mm, which roller is disposed so as to be able to be adjacent to the mat (14) of the deposition head (4).

10. Device according to either one of Claims 2 or 9, in which the deposition head (4) comprises a mechanism (22) for supporting and driving the mat (14) designed to retract the mat (14), which mechanism (22) comprises two lateral structures (15) extending on each side of the mat (14) relative to a direction (23) of introduction of the pre-conformed layer (11) of objects into the deposition head (4).

11. Device according to Claim 10, comprising a main arm (16) connecting the deposition head (4) to the guide column (2), an upstream secondary arm (17a) projecting from an anchor point (18a) of the main arm (16) situated upstream of the reference surface (60) in the introduction direction (23), said upstream secondary arm (17a) being connected to upstream portions (15a) of the two lateral structures (15), the device further comprising a downstream secondary arm (17b) projecting from an anchor point (18b) of the main arm (16) situated downstream of the reference surface (60) in the introduction direction (23), said downstream secondary arm (17b) being connected to downstream portions (15b) of the two lateral structures (15) .

12. Device according to either one of Claims 10 or 11, in which each lateral structure (15) comprises a vertical plate - or a set of vertical plates - parallel to the introduction direction (23) and forming a U, the bottom (15c) of the U extending all along the reference surface (60), and/or in which the device comprises longitudinal centring-clamping means (24-25-26), which means are guided in the lateral structures (15).

13. Device according to any one of the preceding claims, in which the receiving plate (3) and the reference surface (60) each have a surface including a rectangle 800 × 1200 mm.

14. Palletization system comprising:
- a device (1) according to any one of the preceding claims for transferring layers (11),
- a device (51) for preparation of layers (11) disposed upstream of the receiving plate (3) in a direction (12) of conveying the layers (11).

15. System according to Claim 14 comprising:
- a conveyor (5) of pallets (6) adapted to transport pallets (6) oriented relative to the direction (5a) of conveying the pallets (6) either in the lengthwise direction or in the widthwise direction, and
- a device (54) for unstacking pallets (6) one by one on said pallet conveyor (5), which unstacking device (54) is designed to receive either a stack (61) of pallets (6) oriented relative to said conveying direction (5a) in the lengthwise direction or a stack (61) of pallets oriented in the widthwise direction.
